# FASCICULE DE BREVET EUROPEEN

(11) **EP 0 601 180 B1**
(45) Date de publication et mention de la délivrance du brevet: **04.11.1998**
(21) Numéro de dépôt: 93920560.5
(22) Date de dépôt: 16.03.1993
(51) Int. Cl.: H04N 7/00, H04N 7/32

(54) **PROCEDE DE CODAGE D'IMAGES BI-STANDARD TRES BAS DEBIT ET CODEUR-DECODEUR POUR LA MISE EN OEUVRE DE CE PROCEDE**
VERFAHREN ZUM ZWEI-STANDARD-KODIEREN VON BILDERN, MIT SEHR NIEDRIGER DATENRATE UND CODIERER/DECODIERER ZUR DURCHFÜHRUNG DIESES VERFAHRENS
VERY LOW BIT RATE DUAL-STANDARD PICTURE CODING METHOD AND CODEC THEREFOR

(30) Priorité: 17.03.1992 FR 9203163
(43) Date de publication de la demande: 15.06.1994
(73) Titulaire: THOMSON multimedia, 92648 Boulogne Cédex (FR)
(72) Inventeur: CHEVANCE, Christophe Thomson-CSF SCPI, F-92402 Courbevoie Cédex (FR); THOREAU, Dominique Thomson-CSF SCPI, F-92402 Courbevoie Cédex (FR)
(74) Mandataire: Ruellan-Lemonnier, Brigitte
(86) Numéro de dépôt international: FR9300262
(87) Numéro de publication internationale: WO9319557

(56) Documents cités:
- EP-A- 0 374 547
- GB-A- 2 238 444
- US-A- 4 965 667
- IEEE TRANSACTIONS ON CONSUMER ELECTRONICS vol. 36, no. 3, Août 1990, NEW YORK US pages 395 - 402 A. ARTIERI ET AL. 'A Chip Set Core for Image Compression'
- INTERNATIONAL BROADCASTING CONVENTION (IBC), BRIGHTON UK, 23-27 SEPTEMBER 1988 LONDON pages 66 - 69 T. TREW ET AL. 'Spatially adaptive sub-branches for HD-MAC'

## Description

La présente invention concerne un procédé de codage d'images bi-standard très bas débit et un codeur-décodeur pour la mise en oeuvre de ce procédé.

Elle s'applique notamment à la réalisation de dispositifs de codage différentiel ou "CODEC" à des débits inférieurs à 64 Kbits.

Dans ces "CODEC" la transmission des images animées à de très faibles débits requiert, outre de mettre en oeuvre un dispositif de compression des données transmises, de développer des techniques pour limiter la résolution spatio-temporelle du signal d'image. La limitation de la résolution spatiale est obtenue en sous-échantillonnant l'image dans les directions verticale et horizontale. Dans ce domaine il est connu d'utiliser les formats CIF et QCIF qui sont respectivement les abréviations de "Common Intermediate Format" et "Quarter of Common Intermediate Format". Dans le format CIF le nombre de points par ligne en luminance est égal à 352, le nombre de points par ligne en chrominance est respectivement de 176 pour les composantes Dr et Db et le nombre de lignes par image est de 288 pour les signaux de luminance et respectivement de 144 pour les signaux de chrominance Dr et Db. Dans le format QCIF le nombre de points par ligne en luminance est de 176, le nombre de points par ligne en chrominance est respectivement pour les signaux Dr et Db de 88 et le nombre de ligne par image est de 144 pour les signaux de luminance et respectivement de 72 pour les signaux de chrominance Dr et Db.

La limitation de la résolution temporelle a lieu tout simplement en réduisant le nombre d'images transmises par rapport au nombre d'images délivrées par la source. Concrètement en présence d'une source d'image au standard CIF à 25 Hz soit 25 images par seconde, la réduction peut aller jusqu'à permettre de coder et de transmettre des images à une fréquence de 1,25 Hz.

Les codeurs et décodeurs connus actuellement obéissent généralement à la recommandation H261 version 11 1989 du "CCITT specialist group on coding for visual telephony". A ce titre ils conviennent très bien pour des applications de débit qui peuvent varier par multiples entiers de 64 Kbit/s. En-dessous il est difficile de réaliser des codeurs qui ont à la fois une bonne résolution spatiale et une bonne résolution temporelle. Cependant la transmission d'images à très faible débit (32 Kbit/s, 16 Kbit/s, ...) oblige à effectuer un sous-échantillonnage du signal d'image à la fois dans le domaine spatial et dans le domaine temporel. C'est ainsi qu'il peut être choisi de transmettre des images à 5 Hz pour obtenir une résolution spatiale réduite au format QCIF et à 1, 25 Hz pour obtenir une résolution spatiale réduite au format CIF mais dans ces conditions, le standard CIF 1,25 Hz est plutôt destiné aux images faiblement animées tandis que l'autre standard est plus approprié aux scènes à fort mouvement.

L'invention s'applique à des dispositifs connus de codage en mode inter et / ou intra dans lesquels le pas de quantification est ajusté par l'intermédiaire d'un circuit de régulation pour réguler le débit, tels que décrits par exemple dans la demande de brevet anglaise n° GB-A-2 238 444.

Le but de l'invention est de mettre en oeuvre un procédé de codage bi-standard de façon qu'en présence de scènes très faiblement animées la résolution spatiale soit privilégiée en utilisant le format CIF à 1,25 période par seconde tandis que pour les scènes animées la résolution temporelle soit augmentée jusqu'à 5 périodes par seconde au détriment de la résolution spatiale réduite au format QCIF.

A cet effet, l'invention a pour objet un procédé de codage différentiel d'images bi-standard à très bas débit pour transmettre selon un premier standard des images à faible résolution (QCIF) spatiale et à forte résolution temporelle ou selon un deuxième standard des images à forte résolution spatiale (CIF) et faible résolution temporelle consistant à coder les images à transmettre au moyen d'un dispositif de codage comportant au moins un circuit quantificateur d'un signal d'erreur de prédiction, caractérisé en ce qu'il consiste :
- à calculer la valeur moyenne sur une image des pas de quantification utilisés par le circuit quantificateur,
- à comparer la valeur moyenne obtenue à une première valeur de seuil prédéterminée et à une deuxième valeur de seuil prédéterminée supérieure à la première,
et chronologiquement, à coder les images dans le premier standard lorsque la valeur moyenne du pas de quantification est inférieure à la première valeur de seuil prédéterminée,
- puis à coder les images dans le premier standard tant que la valeur moyenne du pas de quantification est inférieure à la deuxième valeur de seuil prédéterminée,
- puis à coder les images dans le deuxième standard lorsque la valeur moyenne du pas de quantification est supérieure à la deuxième valeur de seuil prédéterminée,
- puis à coder les images dans le deuxième standard tant que la valeur moyenne du pas de quantification est supérieure à la première valeur de seuil prédéterminée,
- puis à coder les images dans le premier standard lorsque la valeur moyenne du pas de quantification est inférieure à la première valeur de seuil prédéterminée.

L'invention a également pour objet un codeur-décodeur pour la mise en oeuvre du procédé précité.

L'invention a pour principal avantage qu'elle permet durant la procédure de réduction de débit, un choix et un changement de standard qui sont effectués de manière adaptative. Le premier standard est destiné aux images faiblement animées tandis que le deuxième standard est plus approprié aux scènes à fort mouvement. Ainsi, dans le premier cas la restitution de la résolution spatiale est privilégiée alors que dans le deuxième cas, c'est la transmission du mouvement inter-image qui est privilégiée en augmentant la fréquence temporelle des images à l'entrée du codeur. Le critère de changement de standard qui est basé sur une comparaison de la valeur moyenne du pas de quantification calculée sur une image codée à deux valeurs de seuil prédéterminées, permet d'obtenir un fonctionnement stable du codeur entre les deux modes de codage au moment du changement de standard. Le seuillage à hystérésis qui est ainsi réalisé permet chaque fois que le codeur est placé dans un nouveau standard d'inhiber la procédure de changement de standard durant la transmission des images. Cela permet, dans le cadre d'un codage à très bas débit, au codeur de s'adapter au contenu des scènes qu'il a à traiter par l'utilisation des deux standards spécifiques précités.

D'autres caractéristiques et avantages de l'invention apparaîtront à l'aide de la description qui suit faite en regard des dessins annexés qui représentent ;
- La figure 1 un mode de réalisation d'un codeur selon l'invention.
- La figure 2 un mode de réalisation d'un décodeur selon l'invention.
- La figure 3 un graphe pour illustrer la méthode de comparaison mise en oeuvre par l'invention pour modifier le standard des images à coder en fonction du pas de quantification du codeur représenté à la figure 1.

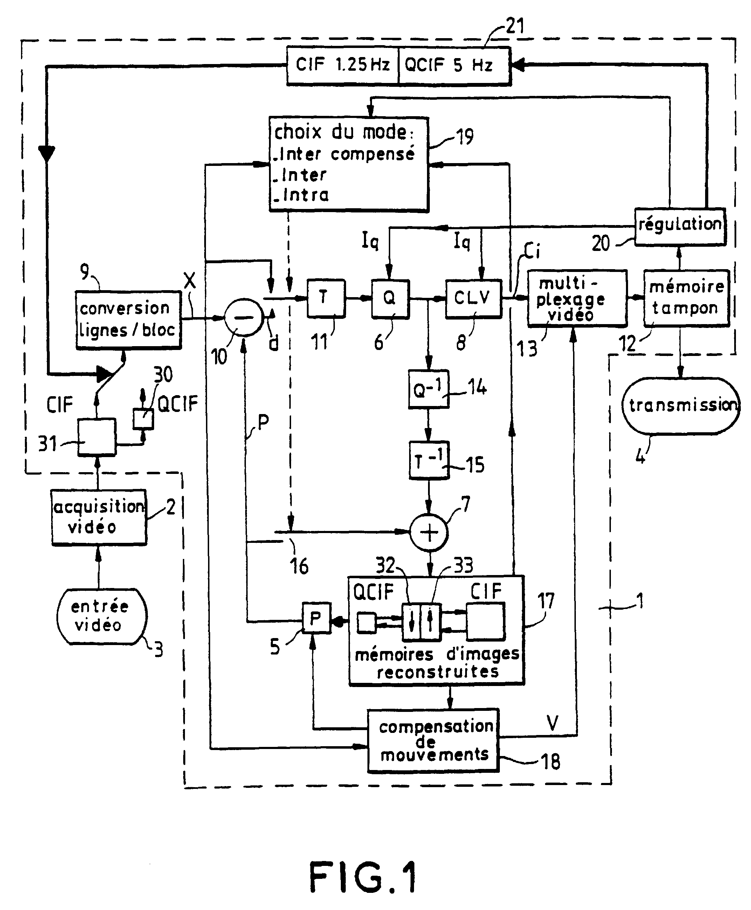

Le codeur selon l'invention qui est représenté à la figure 1 comporte un dispositif de codage 1, représenté à l'intérieur d'une ligne fermée en pointillés, couplé entre un dispositif d'acquisition de signaux vidéo 2 provenant par exemple d'une caméra de télévision 3 et un canal de transmission 4. Le dispositif de codage 1 comprend de façon connue, un prédicteur d'image 5, un quantificateur 6, un dispositif de reconstruction d'images transmises 7, ainsi qu'un allocateur de code formé par un dispositif de codage à longueur variable 8. L'image vidéo à transmettre est appliquée par le dispositif d'acquisition d'image 2 au travers d'un dispositif de conversion lignes/bloc 9 à une première entrée d'un circuit soustracteur 10 dont l'autre entrée est reliée à la sortie du prédicteur d'image 5. La sortie des circuits soustracteurs 10 est reliée à l'entrée du quantificateur 6 par l'intermédiaire d'un dispositif de calcul de transformée cosinus 11. Le prédicteur 5 délivre une valeur de prédiction p sur la première entrée du circuit soustracteur 10. Chaque valeur d'image à coder x est diminuée de sa valeur de prédiction p appliquée sous la forme de la différence d = X-p à l'entrée du quantificateur 6 après avoir été transformée par le dispositif de calcul de transformée cosinus 11. A chaque niveau de quantification, l'allocateur de code 8 associe un code Cᵢ qui est mémorisé dans une mémoire tampon 12 avant d'être transmis sur le canal de transmission 4. T,e circuit de multiplexage 13 assure la transmission des codes Cᵢ dans la mémoire tampon 12. Le signal quantifié obtenu à la sortie du circuit de quantification 6 est appliqué sur une première entrée du circuit de reconstruction 7 par l'intermédiaire d'un circuit de déquantification 14 et d'un dispositif de calcul de transformée cosinus inverse 15. La deuxième entrée du circuit de reconstruction 7 est reliée à la sortie du circuit de prédiction 5 par l'intermédiaire d'un circuit d'aiguillage 16. Les échantillons d'image reconstruits par le circuit de reconstruction d'images 7 sont mémorisés à l'intérieur d'une mémoire d'image 17. Ces échantillons sont ensuite appliqués au circuit de prédiction 5 par l'intermédiaire d'un dispositif de compensation de mouvement 18. Un dispositif de commande 19 permet d'effectuer les commutations de mode selon trois modes de codage qui sont un mode de codage intra-image, un mode de codage inter-image suivant lequel la différence entre un bloc courant de l'image à coder et son bloc homologue dans l'image précédente est codée, et un mode de codage inter-image compensé en mouvement où la différence entre le bloc courant et le bloc déplacé dans l'image précédente, représentant la meilleure prédiction, est codée. Selon l'état de remplissage de la mémoire tampon 12 les coefficients des blocs d'images transformés par transformation cosinus sont quantifiés par le quantificateur 6 et déquantifiés par le déquantificateur 14 avec un pas de quantification qui est calculé par un organe de régulation 20. Le codage à longueur variable qui est assuré par l'allocateur de codes 8 adapte les mots de code aux propriétés statistiques des informations à transmettre. Une fois codée les coefficients sont multiplexés avec d'autres informations représentant par exemple le type de codage utilisé, les vecteurs déplacements en mode compensé etc... et l'ensemble est transmis à l'intérieur de la mémoire tampon 12. Selon l'état de remplissage de la mémoire tampon 12 la quantification des coefficients est faite plus ou moins grossièrement de façon à obtenir un débit régulé. L'estimateur de mouvement 18 utilise le bloc d'image courant et le compare à des blocs dans la mémoire d'image 17 qui contient l'image précédente reconstruite. Cette mémoire reçoit les pixels reconstruits par le dispositif de reconstruction 7 après quantification et transformation inverse des coefficients. Une fois le déplacement estimé l'organe de compensation de mouvement 18 transmet un vecteur mouvement "V" codé au multiplexeur 18 ainsi qu'une valeur de déplacement au prédicteur 5 afin d'extraire le bloc déplacé dans l'image précédente pour calculer et coder la différence entre le bloc courant et sa prédiction. Le codeur qui est ainsi représenté à la figure 1 permet d'effectuer un codage a priori c'est-à-dire de décider du mode de codage avant de procéder au codage proprement dit.

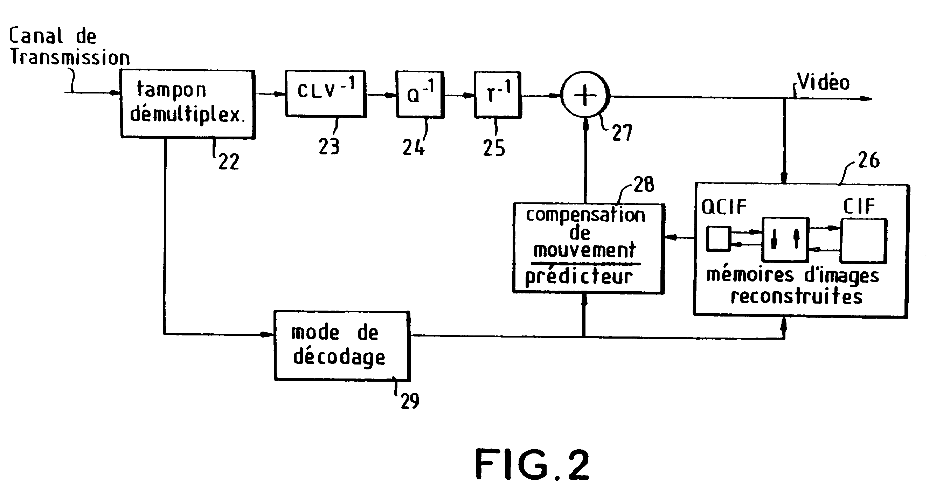

Un décodeur correspondant est représenté à la figure 2. Il comporte une mémoire tampon 22, un décodeur de mots de code à longueur variable 23 couplé à un circuit de déquantification 24 et un circuit de calcul de transformée cosinus inverse 25, les éléments 22 à 25 étant reliés dans cet ordre en série. Il comporte également une mémoire d'image reconstruite 26. Un circuit de reconstruction d'image 27 reçoit sur une première entrée le signal décodé par les éléments 22 à 25 et sur une deuxième entrée les signaux lus dans la mémoire 26 au travers d'un dispositif de compensation de mouvement 28. Un dispositif de commande 29 assure la commande des compensateurs de mouvement de la mémoire d'image 26 en fonction des mots de code reçus par le décodeur pour placer le circuit de reconstruction d'image 27 soit en mode de codage intra-image, soit en mode de codage inter-image, soit en mode de codage inter-image compensé.

Naturellement la mise en oeuvre du procédé selon l'invention nécessite des dispositions particulières spécifiques au niveau de la taille des mémoires tampon 12 et 22 pour assurer la régulation de débit au niveau des critères de changement de standard et de la gestion des images entre images sources et reconstruites.

La taille des mémoires tampons 12 et 22 doit être suffisante pour coder une image QCIF à cinq périodes et avec un débit par exemple de 16 Kbit/s. Cette taille doit naturellement rester constante pour les deux standards. En fait pour des images CIF la capacité mémoire peut être fixée, dans le cas de l'exemple, à 3,2 kbit, un quart d'image, ceci pour ne pas augmenter le délai de transmission des images codées au format QCIF.

Pour que chaque nouvelle image à l'entrée du codeur puisse être traitée au format QCIF 30 ou au format CIF 31 la mémoire d'image reconstruite 17 est organisée de façon à contenir les deux formats. A cette fin la boucle interne du codeur comporte, comme représenté à la figure 1, un suréchantillonneur d'images QCIF 32 pour obtenir l'image homologue CIF lorsque le codage a lieu au format QCIF, et un sous-échantillonneur d'images CIF 33 pour obtenir une image homologue au format QCIF lorsque le codage est réalisé au format CIF, le choix du standard des images QCIF 30 ou CIF 31 étant commandés par un dispositif de commande à seuil 21 couplé à l'organe de régulation 20. Le besoin de posséder en permanence les deux formats d'images CIF et QCIF dans la boucle de codage est justifié par le fait que lorsqu'il y a un changement de standard le codeur doit pouvoir continuer à utiliser les modes de prédiction inter-image et compensés en mouvement.

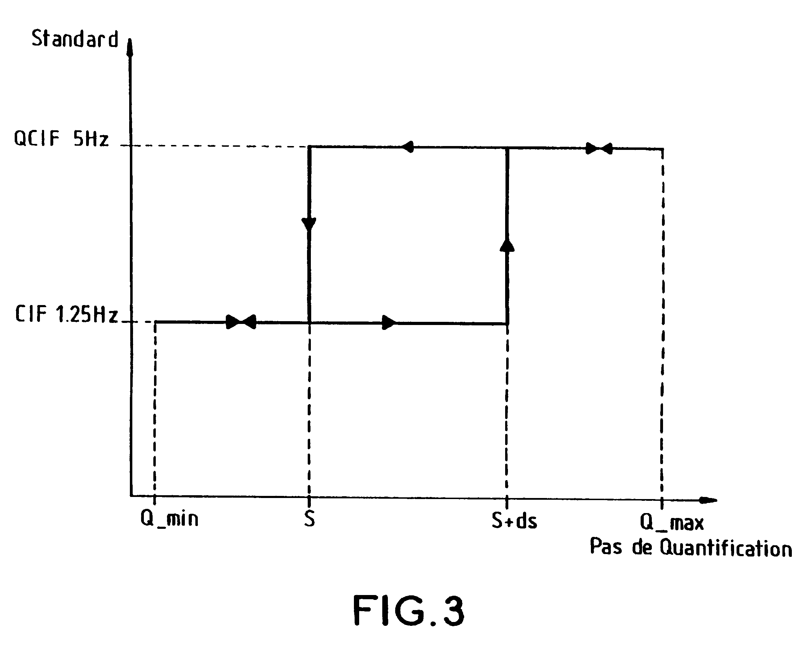

Le critère de changement de standard est basé sur la considération de la valeur moyenne du pas de quantification calculé sur une image codée en standard CIF ou QCIF. Ainsi pour des faibles valeurs de pas moyen c'est le standard CIF à 1,25 Hz qui est utilisé l'autre standard étant utilisé pour les valeurs élevées. La décision est prise par le dispositif de commande à seuil 21 qui effectue la comparaison entre la valeur moyenne obtenue à un seuil avec hystérésis formé par un premier seuil S et un deuxième seuil S+dS comme représenté sur la figure 3. Un seuil à hystérésis est utilisé pour éviter que des oscillations se produisent lors des changements de standard. Eventuellement, une fois passé dans un nouveau standard la procédure de changement de standard peut être inhibée durant les premières images pour assurer davantage la stabilité de fonctionnement. Sur la figure 3 Q-min désigne la valeur minimum du pas de quantification et Q-max désigne la valeur maximum du pas de quantification. Une fois dans le standard CIF, pour un pas de quantification qui varie entre la valeur de pas Q-min à la valeur de seuil S+dS le standard CIF est utilisé. Au-delà du seuil S+dS c'est le standard QCIF qui est utilisé. Ensuite dans la plage de pas de quantification compris entre le seuil S et le pas de quantification Q-max le codeur reste dans le standard QCIF. En-dessous de la valeur de seuil S le codeur revient dans le mode de codage du standard CIF. L'hystérésis a lieu dans la plage de seuil dS à l'intérieur de laquelle le codeur reste dans le standard en cours.

## Revendications

1. Procédé de codage d'images bi-standard à très bas débit pour transmettre selon un premier standard les images à faible résolution spatiale (QCIF) et à forte résolution temporelle ou selon un deuxième standard à transmettre des images à forte résolution spatiale (CIF) et faible résolution temporelle consistant à coder les images à transmettre au moyen d'un dispositif de codage comportant un circuit quantificateur d'un signal d'erreur de prédiction, caractérisé en ce qu'il consiste :
- à calculer (21) la valeur moyenne sur une image des pas de quantification utilisés par le circuit quantificateur,
- à comparer la valeur moyenne obtenue à une première valeur de seuil prédéterminée et à une deuxième valeur de seuil prédéterminée supérieure à la première,
et chronologiquement, à coder (8, 30) les images dans le premier standard lorsque la valeur moyenne du pas de quantification est inférieure à la première valeur de seuil prédéterminée,
- puis à coder les images (8, 30) dans le premier standard tant que la valeur moyenne du pas de quantification est inférieure à la deuxième valeur de seuil prédéterminée,
- puis à coder les images (8, 31) dans le deuxième standard tant que la valeur moyenne du pas de quantification est supérieure à la deuxième valeur de seuil prédéterminée,
- puis à coder les images dans le deuxième standard tant que la valeur moyenne du pas de quantification est supérieure à la première valeur de seuil prédéterminée,
- puis à coder les images (8, 30) dans le premier standard lorsque la valeur moyenne du pas de quantification est inférieure à la première valeur de seuil prédéterminée.

2. Procédé selon la revendication 1, caractérisé en ce qu'il consiste à décomposer les images en bloc, à calculer (10) pour chaque bloc d'une image courante une erreur de prédiction et à transformer par une transformation cosinus (11) l'erreur de prédiction avant quantification.

3. Procédé selon la revendication 2, caractérisé en ce qu'il consiste à coder (8) les données quantifiées suivant un code à longueur variable.

4. Procédé selon l'une quelconque des revendications 1 à 3, caractérisé en ce qu'il consiste à compenser l'erreur de prédiction en mouvement.

5. Dispositif de codage pour la mise en oeuvre du procédé selon l'une quelconque des revendications 1 à 4, comprenant un prédicteur d'image (5), un dispositif de calcul d'erreur de prédiction (10), un quantificateur (6) quantifiant les données d'images avec un pas de quantification variable, un dispositif de reconstruction (7, 14, 15) d'images transmises pour reconstituer les images à partir des données quantifiées, un allocateur de code (8) recevant les données quantifiées pour allouer un code aux données quantifiées à transmettre, et un dispositif de régulation (20) pour déterminer le pas de quantification, le dispositif de codage étant caractérisé en ce que le dispositif de régulation (20) est couplé au dispositif de calcul d'erreur de prédiction (10) par l'intermédiaire d'un dispositif de commande à seuil (21), le dispositif de commande à seuil étant adapté pour
- calculer (21) la valeur moyenne sur une image des pas de quantification utilisés par le circuit quantificateur,
- comparer la valeur moyenne obtenue à une première valeur de seuil prédéterminée et à une deuxième valeur de seuil prédéterminée supérieure à la première,
et pour commander le dispositif de codage de manière à chronologiquement coder (8, 30) les images dans le premier standard lorsque la valeur moyenne du pas de quantification est inférieure à la première valeur de seuil prédéterminée,
- puis coder les images (8, 30) dans le premier standard tant que la valeur moyenne du pas de quantification est inférieure à la deuxième valeur de seuil prédéterminée,
- puis coder les images (8, 31) dans le deuxième standard tant que la valeur moyenne du pas de quantification est supérieure à la deuxième valeur de seuil prédéterminée,
- puis coder les images dans le deuxième standard tant que la valeur moyenne du pas de quantification est supérieure à la première valeur de seuil prédéterminée,
- puis coder les images (8, 30) dans le premier standard lorsque la valeur moyenne du pas de quantification est inférieure à la première valeur de seuil prédéterminée.

6. Dispositif de décodage pour le décodage de signaux codés selon le procédé d'une des revendications 1 à 4, comprenant :
- un tampon démultiplexeur (22) pour séparer les données vidéo codées de données de modes de codage, une mémoire d'image reconstruite, un prédicteur,
- un circuit de décodage de mode pour décoder les données de modes de codage et fournir les modes de codage au prédicteur (28) et à la mémoire d'image reconstruite (26),
- un décodeur à longueur variable (23) pour décoder les données vidéo codées,
- un quantificateur inverse (24) pour déquantifier ces données,
- un circuit de transformée cosinus discrète inverse (25) pour transformer les données déquantifiées dans le domaine spatial,
- un circuit de reconstruction (27) recevant ces données transformées sur une première entrée pour fournir une image reconstruite en sortie, cette image étant transmise à la mémoire d'image reconstruite (26), puis au prédicteur (28) pour fournir une image prédite sur la deuxième entrée du circuit de reconstruction,
caractérisé en ce que la mémoire d'image reconstruite (26) comporte un suréchantillonneur d'images et un sous-échantillonneur d'images pour la mémorisation des images dans les deux formats.

## Patentansprüche

1. Verfahren zum Zwei-Standard-Kodieren von Bildern mit sehr niedriger Datenrate, um Bilder mit einer niedrigen QCIF-räumlichen Auflösung und einer hohen zeitlichen Auflösung gemäß einem ersten Standard zu übertragen oder Bilder mit einer hohen räumlichen CIF-Auflösung und einer niedrigen zeitlichen Auflösung gemäß einem zweiten Standard zu übertragen, wobei die zu übertragenden Bilder mit einer Kodiervorrichtung kodiert werden, die eine Quantisierschaltung für ein Voraussagefehler-Signal enthält, gekennzeichnet durch folgende Schritte:
Berechnen (21) des Mittelwertes über ein Bild der durch die Quantisierschaltung angewendeten Quantisierschritte,
Vergleichen des gewonnenen Mittelwertes mit einem ersten vorbestimmten Schwellwert und mit einem zweiten vorbestimmten Schwellwert, der oberhalb des ersten Schwellwertes liegt,
und chronologisches Kodieren (8, 30) der Bilder in dem ersten QCIF-Standard, wenn der Mittelwert des Quantisierschrittes unterhalb des ersten vorbestimmten Schwellwertes liegt,
dann Kodieren der Bilder (8, 30) in dem ersten Standard, wenn der Mittelwert des Quantisierschrittes unterhalb des zweiten vorbestimmten Schwellwertes liegt,
dann Kodieren der Bilder (8, 31) in dem zweiten Standard, wenn der Mittelwert des Quantisierschrittes oberhalb des zweiten vorbestimmten Schwellwertes liegt,
dann Kodieren der Bilder in dem zweiten Standard, wenn der Mittelwert des Quantisierschrittes oberhalb des ersten vorbestimmten Schwellwertes liegt,
dann Kodieren der Bilder (8, 30) in dem ersten Standard, wenn der Mittelwert des Quantisierschrittes unterhalb des ersten vorbestimmten Schwellwertes liegt.

2. Verfahren nach Anspruch 1,
dadurch gekennzeichnet, daß die Bilder in Blöcke zerlegt werden, daß für jeden Block eines laufenden Bildes ein Voraussagefehler berechnet wird (10) und daß der Voraussagefehler vor der Quantisierung durch eine Cosinustransformation (11) transformiert wird.

3. Verfahren nach Anspruch 2,
dadurch gekennzeichnet, daß die quantisierten Daten gemäß einem Kode mit variabler Länge kodiert werden (8).

4. Verfahren nach einem der Ansprüche 1 bis 3,
dadurch gekennzeichnet, daß der Voraussagefehler in der Bewegung kompensiert wird.

5. Kodier-Vorrichtung zur Durchführung des Verfahrens nach einem der Ansprüche 1 bis 4, enthaltend einen Bild-Prädiktor (5), eine Vorrichtung zum Berechnen des Voraussagefehlers (10), einen Quantisierer (6), der die Bilddaten mit einem variablen Quantisierschritt quantisiert, eine Vorrichtung zur Rekonstruktion (7, 14, 15) der übertragenen Bilder, um die Bilder aus den quantisierten Daten zurückzugewinnen, einen die quantisierten Daten empfangenden Kodezuweiser (8), um den quantisierten, zu sendenden Daten einen Kode zuzuweisen, und eine Regeleinheit (20) zum Bestimmen des Quantisierschrittes,
dadurch gekennzeichnet, daß
die Regeleinheit (20) über eine Steuereinheit mit einem Schwellwert (21) mit der Einheit zum Berechnen des Voraussagefehlers (10) verbunden ist und die Steuereinheit mit einem Schwellwert folgendes bewirkt:
Berechnen (21) des Mittelwertes über ein Bild der durch die Quantisierschaltung angewendeten Quantisierschritte,
Vergleichen des gewonnenen Mittelwertes mit einem ersten vorbestimmten Schwellwert und mit einem zweiten vorbestimmten Schwellwert, der oberhalb des ersten Schwellwertes liegt,
und zum Steuern der Kodiereinheit derart, daß die Bilder in dem ersten QCIF-Standard chronologisch kodiert werden (8, 30), wenn der Mittelwert des Quantisierschrittes unterhalb des ersten vorbestimmten Schwellwertes liegt,
dann Kodieren der Bilder (8, 30) in dem ersten Standard, wenn der Mittelwert des Quantisierschrittes unterhalb des zweiten vorbestimmten Schwellwertes liegt,
dann Kodieren der Bilder (8, 31) in dem zweiten Standard, wenn der Mittelwert des Quantisierschrittes oberhalb des zweiten vorbestimmten Schwellwertes liegt,
dann Kodieren der Bilder in dem zweiten Standard, wenn der Mittelwert des Quantisierschrittes oberhalb des ersten vorbestimmten Schwellwertes liegt,
dann Kodieren der Bilder (8, 30) in dem ersten Standard, wenn der Mittelwert des Quantisierschrittes unterhalb des ersten vorbestimmten Schwellwertes liegt.

6. Dekodier-Vorrichtung zum Dekodieren von Signalen, die gemäß dem Verfahren nach einem der Ansprüche 1 bis 4 kodiert sind, enthaltend:
einen Puffer-Demultiplexer (22) zum Trennen der kodierten Videodaten von den Daten für die Kodiermodi, einen Speicher für das rekonstruierte Bild, einen Prädiktor,
eine Dekodierschaltung für den Modus zum Dekodieren der Daten für die Kodiermodi und zum Bilden der Kodiermodi für den Prädiktor (28) und den Speicher (26) für das rekonstruierte Bild,
einen Dekoder (23) für variable Länge zum Dekodieren der kodierten Videodaten,
einen inversen Quantisierer (24) zum Dequantisieren dieser Daten,
eine Schaltung (25) für eine inverse diskrete Cosinustransformation zum Transformieren der dequantisierten Daten in den räumlichen Bereich,
eine Rekonstruierschaltung (27), die die transformierten Daten an einem ersten Eingang empfängt und am Ausgang ein rekonstruiertes Bild liefert, wobei dieses Bild zu dem Speicher für das rekonstruierte Bild und dann zu dem Prädiktor (28) übertragen wird, um ein vorausgesagtes Bildes an den zweiten Eingang der Rekonstruierschaltung zu liefern,
dadurch gekennzeichnet, daß der Speicher (26) für das rekonstruierte Bild einen Überabtaster für Bilder QCIF und einen Unterabtaster für Bilder CIF für die Speicherung der Bilder in den beiden Formaten aufweist.

## Claims

1. Method for dual-standard coding of images at very low data rate, for transmitting images with low spatial resolution (QCIF) and with high time resolution according to a first standard, or to transmit images with high spatial resolution (CIF) and low time resolution according to a second standard, consisting in coding the images to be transmitted by means of a coding device including a quantifier circuit for a prediction error signal, characterized in that it consists:
- in calculating (21) the mean value over an image of the quantification steps used by the quantifier circuit,
- in comparing the mean value obtained with a first predetermined threshold value and with a second predetermined threshold value higher than the first,
- and, chronologically, in coding (8, 30) the images in the first standard when the mean value of the quantification step is lower than the first predetermined threshold value,
- then in coding the images (8, 30) in the first standard as long as the mean value of the quantification step is lower than the second predetermined threshold value,
- then in coding the images (8, 31) in the second standard as long as the mean value of the quantification step is higher than the second predetermined threshold value,
- then in coding the images in the second standard as long as the mean value of the quantification step is higher than the first predetermined threshold value,
- then in coding the images (8, 30) in the first standard when the mean value of the quantification step is lower than the first predetermined threshold value.

2. Method according to Claim 1, characterized in that it consists in breaking down the images to a block, in calculating (10) a prediction error for each block of a current image, and in transforming the prediction error by a cosine transform (11) before quantification.

3. Method according to Claim 2, characterized in that it consists in coding (8) the quantified data according to a variable-length code.

4. Method according to any one of Claims 1 to 3, characterized in that it consists in compensating for the movement prediction error.

5. Coding device for implementing the method according to any one of Claims 1 to 4, comprising an image predictor (5), a prediction error calculation device (10), a quantifier (6) quantifying the image data with a variable quantification step, a device (7, 14, 15) for reconstructing transmitted images so as to rebuild the images from the quantified data, a code allocator (8) receiving the quantified data so as to allocate a code to the quantified data to be transmitted, and a regulation device (20) for determining the quantification step, the coding device being characterized in that the regulation device (20) is coupled to the prediction error calculation device (10) via a threshold-type control device (21), the threshold-type control device being adapted so as
- to calculate (21) the mean value over an image of the quantification steps used by the quantifier circuit,
- compare the mean value obtained with a first predetermined threshold value and with a second predetermined threshold value higher than the first,
and so as to control the coding device in such a way as chronologically to code (8, 30) the images in the first standard when the mean value of the quantification step is lower than the first predetermined threshold value,
- then to code the images (8, 30) in the first standard as long as the mean value of the quantification step is lower than the second predetermined threshold value,
- then to code the images (8, 31) in the second standard so long as the mean value of the quantification step is higher than the second predetermined threshold value,
- then to code the images in the second standard as long as the mean value of the quantification step is higher than above the first predetermined threshold value,
- then to code the images (8, 30) in the first standard when the mean value of the quantification step is lower than the first predetermined threshold value.

6. Decoding device for decoding signals coded according to the method of one of Claims 1 to 4, comprising:
- a demultiplexer buffer (22) for separating the coded video data from coding modes data, a reconstructed-image memory, a predictor,
- a mode decoding circuit for decoding the coding modes data and delivering the coding modes to the predictor (28) and to the reconstructed-image memory (26),
- a variable-length decoder (23) for decoding the coded video data,
- an inverse quantifier (24) for de-quantifying these data,
- an inverse discrete cosine transform circuit (25) for transforming the de-quantified data into the spatial domain,
- a reconstruction circuit (27) receiving these transformed data on a first input so as to deliver a reconstructed image at output, this image being transmitted to the reconstructed-image memory (26), then to the predictor (28) so as to deliver a predicted image on the second input of the reconstruction circuit,
characterized in that the reconstructed-image memory (26) comprises an image over-sampler and an image under-sampler for storing the images in the two formats.
